# EUROPÄISCHE PATENTANMELDUNG

(11) **EP 0 628 762 A1**
(43) Veröffentlichungstag der Anmeldung: **14.12.1994**
(21) Anmeldenummer: 94108915.3
(22) Anmeldetag: 10.06.1994
(51) Int. Cl.: F16P 3/00, F16P 3/20

(54) **Handarbeitsgerät mit einem Antrieb**

(30) Priorität: 11.06.1993 DE 9308698 U
(71) Anmelder: Dolmar GmbH, D-22045 Hamburg (DE)
(72) Erfinder: Schäperkötter, Heinrich, Dr., D-21465 Wentorf (DE); Liebentraut, Frank, D-22397 Hamburg (DE)
(74) Vertreter: Richter, Werdermann & Gerbaulet

(57) **Zusammenfassung**

Um ein Handarbeitsgerät (100) mit einem Antrieb (14), insbesondere in Form einer Kettensäge oder Heckenschere, wobei das Handarbeitsgerät (100) mit zwei Handgriffen (11, 12) und einem für die Steuerung des Antriebes (14) vorgesehenen Schaltglied (13) ausgestattet ist, und zur Sicherstellung einer ZweiHand-Bedienung an jedem der zwei Handgriffe (11,12) ein Sicherungsglied (15, 16) aufweist, welches mit dem Schaltglied (13) derart zusammenwirkt, daß eine Betätigung des Schaltgliedes (13) nur beim Umfassen beider Handgriffe (11, 12) erfolgen kann, zu schaffen, dessen Sicherheitsschaltung für die Zwei-Hand-Bedienung störunanfällig, leicht und gefahrlos zu bedienen und flexibel an verschiedene Gegebenheiten anzupassen ist, wird vorgeschlagen, daß zumindest eines der beiden Sicherungsglieder (15, 16) als elektrisch wirksamer linienförmiger Sensor ausgebildet ist und über eine als Niederspannungsschaltung ausgelegte Steuerlogik (20) den Antrieb (14) steuert.

## Beschreibung

Die Vorliegende Erfindung betrifft ein Handarbeitsgerät mit einem Antrieb, insbesondere in Form einer Kettensäge oder Heckenschere, wobei das Handarbeitsgerät mit zwei Handgriffen und einem für die Steuerung des Antriebs Vorgesehenen Schaltglied ausgestattet ist, und zur Sicherstellung einer Zwei-Hand-Bedienung an jedem der zwei Handgriffe ein Sicherungsglied aufweist, welches mit dem Schaltglied derart zusammenwirkt, daß eine Betätigung des Schaltgliedes nur beim Umfassen beider Handgriffe erfolgen kann.

Ein solches Handarbeitsgerät in Form einer Kettensage ist z.B. aus der DE 87 16 112.5 U1 bekannt.

Bei fremdangetriebenen, d.h. mit einem Elektro- oder Verbrennungsmotor oder einem hydraulischen oder pneumatischen Antrieb ausgestatteten Handarbeitsgeräten ist es häufig aus Sicherheitsgründen notwendig, Vorkehrungen zu treffen, die gewährleisten, daß das jeweilige Gerät während des Einsatzes mit beiden Händen an dafür Vorgesehenen Griffen gehalten wird (Zwei-Hand-Bedienung). Diese Vorkehrungen umfassen beispielsweise neben dem Hauptsteuerschalter zusätzliche, in die Griffe integrierte Steuerglieder.

So wird in der DE 87 16 112 U1 eine Kettensäge mit einer ersten, in das Gehäuse integrierten Handhabe und einem am Gehäuse angeordneten Griffbügel als weiterer Handhabe vorgeschlagen, bei dem neben einem ersten, aus einem Sicherungsglied und einem Schaltglied bestehenden ersten Steuerglied für den Kettenantrieb in der ersten Handhabe ein weiteres Steuerglied im Griffbügel vorgesehen ist. Der Kettenantrieb ist nur ansteuerbar, wenn neben dem ersten auch das zweite Steuerglied betätigt wird.

Das zweite Steuerglied ist dabei als mit einem Schalter vorzugsweise über einen Bowdenzug in Wirkverbindung stehendes Betätigungsglied ausgebildet. Der Schalter selbst unterbricht in einer der Schalterstellungen die mechanische, hydraulische oder elektrische Verbindung zwischen dem ersten Steuerglied und dem Kettenantrieb.

Die bekannte Lösung ist mit aufwendigen mechanischen Einrichtungen wie z.B. einem Bowdenzug oder dem druckknopfartigen Sicherungsglied im hinteren Handgriff ausgerüstet, die störungsanfällig sind. Die damit betätigten elektromechanischen Wippen oder Schalter bieten weiterhin keine ausreichende Bedienungssicherheit. Darüber hinaus sind die verwendeten Schaltelemente (bei elektrischem Antrieb) grundsätzlich auf der Netzspannungsseite angeordnet, was zu Isolations- und Sicherheitsproblemen führt. Schließlich ist es beim bekannten System nur schwer möglich, weitere Sicherheitseinrichtungen und deren Signale auszuwerten und bei der Sicherheitsschaltung zu berücksichtigen.

Es ist daher Aufgabe der Erfindung, ein fremdangetriebenes Handarbeitsgerät zu schaffen, dessen Sicherheitsschaltung für die Zwei-Hand-Bedienung störunanfällig, leicht und gefahrlos zu bedienen und flexibel an verschiedene Gegebenheiten anzupassen ist.

Die Aufgabe wird durch die im Patentanspruch 1 gekennzeichneten Merkmale gelöst.

Es ist dabei bei einem Gerät der eingangs genannten Art vorgesehen, daß zumindest eines der beiden Sicherungsglieder als elektrisch wirksamer linienförmiger Sensor ausgebildet ist und über eine als Niederspannungsschaltung ausgelegte Steuerlogik den Antrieb steuert.

Der Kern der Erfindung besteht darin, die Sicherheitsschaltung auf der Grundlage eines linienförmigen, elektrisch arbeitenden Sensors als elektronische Logikschaltung im Kleinspannungsbereich auszuführen. Hierdurch wird einerseits eine Berührung gefährlicher Spannungen beim Handhaben des Gerätes sicher vermieden. Andererseits ist die Sicherheitsschaltung aufgrund ihres elektronischen Aufbaues wenig störanfällig und leicht zu bedienen. Darüber hinaus ermöglicht der Einsatz der Steuerlogik die Verwendung auch von relativ hochohmigen Sensoren, so daß insgesamt eine Vielzahl Von Sensoren für die Sicherheitsschaltung zur Verfügung steht. Weiter können innerhalb der Logikschaltung zwanglos weitere Signalgeber, zum Beispiel ein Sensor für die Kettenbremse einer Kettensäge, zugeschaltet und damit in die Sicherheitsschaltung mit einbezogen werden. Schließlich können die Sensoren sehr klein gehalten werden, da sie nur geringe Steuerleistungen verarbeiten müssen. Dieses ist ein wichtiger Vorteil, da in vielen Handgriffen nicht genügend Bauraum für Leistungsschalter vorhanden ist.

Gemäß einer ersten bevorzugten Ausführungsform des Handarbeitsgerätes nach der Erfindung sind beide Sicherungsglieder als elektrisch arbeitende, linienförmige Sensoren ausgebildet und gemeinsam an die Steuerlogik angeschlossen. Hierdurch können beide Sicherungsglieder in derselben Weise an die Steuerlogik angeschlossen werden. Die linienhafte Ausführung der beiden Sensoren gewährleistet, daß die Sicherheitsschaltung auch bei abweichender Griffhaltung und unterschiedlicher Handgröße sicher anspricht und einen reibungslosen Betrieb des Gerätes ermöglicht.

Eine zweite bevorzugte Ausführungsform zeichnet sich dadurch aus, daß das Handarbeitsgerät als Antrieb einen mit Netzspannung betreibbaren Elektromotor aufweist, daß die Steuerlogik über ein galvanisch trennendes Netzteil an das Netz anschließbar ist, und daß die Steuerlogik den Elektromotor über eine Motoransteuerungseinheit (z.B. Relais) steuert. Diese Auslegung gewährleistet bei einem elektrischen Gerät mit Netzbetrieb die sichere Trennung der Sicherungsglieder von der Netzspannung.

Eine dritte bevorzugte Ausführungsform der Erfindung ist dadurch gekennzeichnet, daß der bzw. die linienförmigen Sensoren jeweils zwei in einem schlauchartigen, elastischen und nichtleitenden Kunststoffkanal parallel zueinander angeordnete, sich im ungedrückten Zustand des Kunststoffkanals nicht berührende Kontaktleiter umfassen, welche beim Zusammendrücken des Kunststoffkanals miteinander in Berührung kommen und durch Schließen des Kontaktes ein elektrisches Signal abgeben. Diese Art von Sensoren hat den Vorteil, daß sie robust und nach außen geschützt ist und einen sicheren Kontakt über eine relativ große Sensorlänge ermöglicht.

Vorteilhafte Ausführungsformen und zweckmäßige Weiterbildungen ergeben sich aus den Unteransprüchen.

Die Erfindung soll nachfolgend anhand von Ausführungsbeispielen im Zusammenhang mit der Zeichnung näher erläutert werden. Es zeigen
- **Fig.** 1: in perspektivischer Seitenansicht das Gehäuse mit den beiden Handhaben eines bevorzugten Ausführungsbeispiels der Erfindung mit in beiden Handhaben eingelassenen linienförmigen Sensoren,
- **Fig.** 2a: im Längsschnitt den Griffbügel aus Figur 1 mit einer für die Aufnahme des Sensors vorgesehenen Nut (Fig.1a),
- **Fig.** 2b: den Querschnitt durch den Griffbügel mit Sensor entlang der Fläche A-A aus Figur 2a,
- **Fig.** 2c: im Querschnitt den inneren Aufbau des Sensors aus Fig. 2b,
- **Fig.** 3: das Prinzipschaltbild einer beispielhaften Sicherheitsschaltung nach der Erfindung für ein elektrisch angetriebenes Handarbeitsgerät, und
- **Fig.** 4: den detailierten Schaltplan einer bewährten Sicherheitsschaltung gem. Fig.3.

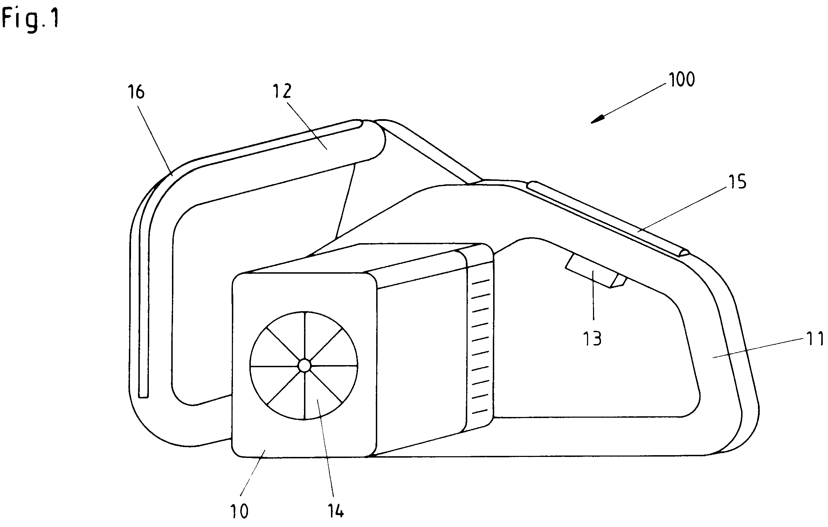

Figur 1 zeigt ein bevorzugtes Ausführungsbeispiel eines Handarbeitsgerätes nach der Erfindung. Die Figur ist dabei der Einfachheit halber auf den Gehäuseteil mit den Handhaben beschränkt, so daß z.B. Schwert und Kette einer Kettensäge nicht dargestellt sind. Das Handarbeitsgerät 100 weist ein Gehäuse 10 zur Aufnahme eines Antriebes 14 auf, der beispielsweise als Verbrennungsmotor oder Elektromotor ausgebildet sein kann und in der Figur durch den angedeuteten Lüfterflügel zu erkennen ist. In das Gehäuse 10 integriert ist ein hinterer Handgriff 11, der bei der dargestellten Ausführung üblicherweise mit der rechten Hand umgriffen wird. Innerhalb des hinteren Handgriffes 11 ist ein tastenförmiges Schaltglied 13 angeordnet, welches mit einem Finger der rechten Griffhand betätigt und durch welches der Antrieb 14 nach Art eines Hauptschalters grundsätzlich eingeschaltet werden kann.

Auf der Außenseite des Handgriffes 11 ist oberhalb des Schaltgliedes 13 ein erstes Sicherungsglied 15 in Form eines linienförmigen Sensors eingelassen.

Das Sicherungsglied 15 ragt entlang seiner Achse mit einem Teil aus dem Griffkörper heraus und wird beim Umfassen des Griffes 11 durch die Griffhand zwangsweise eingedrückt. Aufgrund des später noch näher zu erläuternden inneren Aufbaues des Sensors wird im Sensor durch das Eindrücken ein elektrischer Kontakt geschlossen, der als Sicherungssignal von der hier nicht dargestellten Sicherheitselektronik ausgewertet wird.

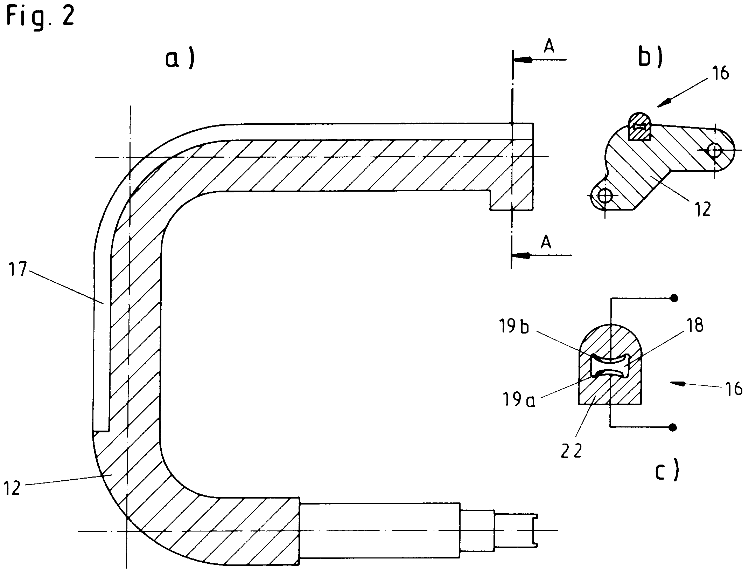

Quer zum hinteren Handgriff 11 ist vor dem Gehäuse ein weiterer Handgriff 12 in Form eines Griffbügels angeordnet, der bei der Zwei-Hand-Bedienung durch die linke Hand umgriffen werden muß. Auch in den zweiten Handgriff 12 ist auf der Außenseite ein zweites Sicherungsglied 16 eingelassen, welches als linienförmiger Sensor in derselben Weise aufgebaut ist, wie das erste Sicherungsglied 15. Die Anordnung der beiden Sicherungsglieder 15 und 16 gewährleistet bei einem geeigneten Zusammenwirken mit dem Schaltglied, daß das Handarbeitsgerät 100 nur dann bestimmungsgemäß in Betrieb genommen werden kann, wenn die beiden Handgriffe 11,12 gleichzeitig von jeweils einer Hand umgriffen werden. Anordnung und innerer Aufbau des Sicherungsgliedes 16 im Griffbügel des Handgriffes 12 können anhand der Figur 2 näher erläutert werden.

Figur 2a zeigt im Längsschnitt den Handgriff 12 aus Figur 1. Der Handgriff kann aus Vollmaterial oder einem mit Kunststoff gefüllten Metallrohr od.dgl. hergestellt sein. Auf seiner Außenseite ist über den größten Teil der umgreifbaren Länge eine Nut 17 eingelassen, welche - wie der Querschnitt entlang der Fläche A-A in Figur 2b zeigt - das sensorartige Sicherungsglied 16 aufnimmt.

Ein beispielhafter innerer Aufbau des Sensors ist in der Querschnittsdarstellung der Figur 2c wiedergegeben: Der linienförmige Sensor besteht bevorzugt aus einem schlauchartigen Kunststoffkanal 22 aus einem nichtleitenden Elastomer, in dessen Hohlraum 18 in einem Abstand gegenüberliegend und sich nicht berührend zwei elektrische Kontaktleiter 19a,b parallel zueinander verlaufen. Die Kontaktleiter 19a,b können beispielsweise als Teil des Kunststoffkanals 22 aus einem elektrisch leitfähigen Elastomer oder aus einer oberflächlich aufgebrachten Metall- oder sonstigen Leitschicht bestehen. Beim Zusammendrücken des elastischen Kunststoffkanals 22 kommen die beiden Kontaktleiter 19a,b miteinander in Berührung, so daß hierdurch die durch entsprechende Anschlüsse an die Logik anschließbare Sensorleitung geschlossen und ein Signal erzeugt wird, das als Steuersignal der Logikschaltung zugeführt wird. Es ist andererseits aber auch denkbar und kann vorteilhaft sein, anstelle des schlauchartigen Kanals einen filmartigen Streifen zu verwenden, der ebenfalls bei Druckbeaufschlagung, Dehnung oder Biegung einen Kontakt schließt oder einen Widerstand derart ändert, daß ein Schaltsignal erzeugt wird. Weiterhin ist es auch möglich, einen geschlossenen elastischen Schlauch zu verwenden, dessen Volumen an einen elektrischen Drucksensor angeschlossen ist.

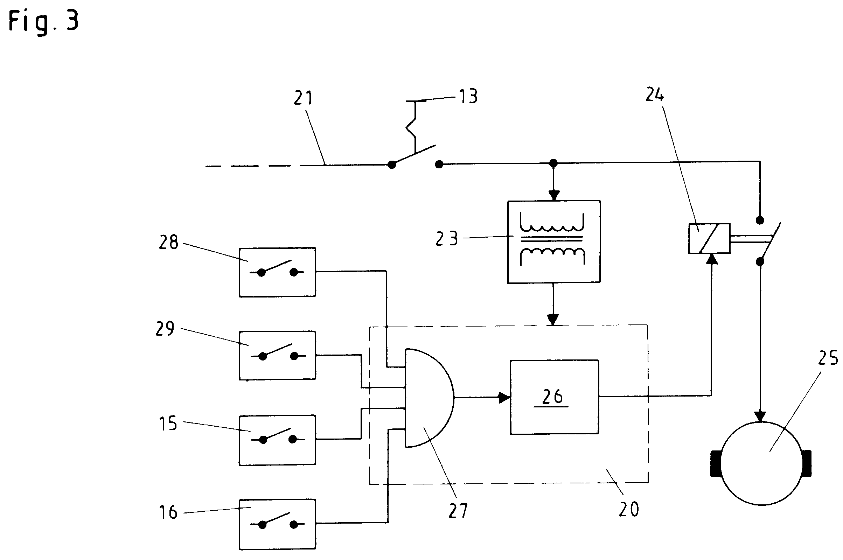

Die Sicherungsglieder 15 und 16 aus Figur 1 sind an eine Sicherungs- und Logikschaltung angeschlossen, deren prinzipieller Aufbau im Falle eines elektrisch aus dem Netz angetriebenen Handarbeitsgerätes in Figur 3 wiedergegeben ist:
Der Antrieb umfaßt einen Elektromotor 25, der über eine zentrale Motoransteuerungseinheit 24 (beispielsweise ein Relais) (und das als Taster ausgebildete Schaltglied 13) an eine Netzleitung 21 anschließbar ist. Das dito 24 wird von einer Steuerlogik 20 angesteuert, die über ein galvanisch getrenntes Netzteil 23 aus dem Netz versorgt wird und im wesentlichen ein UND-Glied 27 am Eingang und einen Leistungsteil 26 am Ausgang enthält. Das Leistungsteil 26 ist z.B. als Leistungsschalter ausgelegt und steuert den Strom durch die Motoransteue-rungseinheit 24. Das UND-Glied 27 weist je nach Bedarf eine Vielzahl von Eingängen auf, über die Schalt- und Sicherungssignale von verschiedenen Schalt- und Sicherungsgliedern logisch verknüpft werden können, so daß das dito 24 nur dann arbeitet, wenn alle Eingänge des UND-Gliedes 27 gleichzeitig denselben logischen Zustand (1 oder 0) einnehmen.

Zwei Eingänge des UND-Gliedes 27 sind für die bereits beschriebenen beiden linienförmigen Sicherungsglieder 15 und 16 vorgesehen. Weitere Signalgeber können ein Überlastschalter 28 und - bei einer Kettensäge - ein mit der Kettenbremse in Verbindung stehender Kontakt sein. Der Überlastschalter 28 kann z.B. als Thermoschalter ausgebildet sein, der den Elekromotor 25 vor thermischer Überlastung schützt. Der Kontakt 29 der Kettenbremse wird geschlossen, wenn die Kettenbremse gelöst ist.

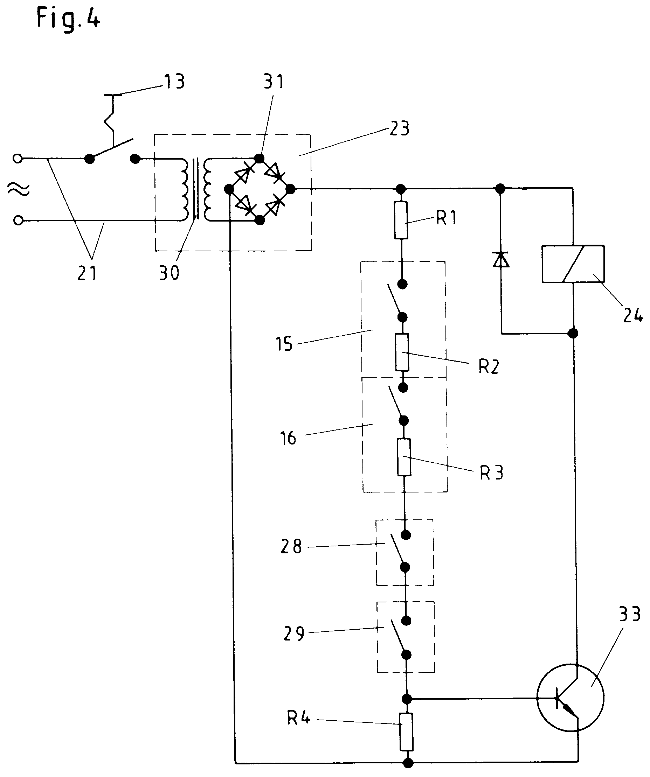

Ein in der Praxis bewährter Schaltungsaufbau einer Schaltung nach Figur 3 ist in Figur 4 dargestellt:
Die Sicherungsglieder 15 und 16 sind in der oben beschriebenen Form als Schlauchwiderstände ausgeführt, die, je nach Ort der Betätigung, bei einer maximalen Schlauchgesamtlänge von z.B. 300 mm einen Widerstand R2 bzw. R3 zwischen wenigen 100 bis etwa 600 Ohm haben. Über das Schaltglied 13, einen Leistungsschalter, wird die Spannungsversorgung der Elektrosäge (od.dgl.) eingeschaltet. Der Transformator 30 transformiert die Netzspannung bei Trafonennbelastung von Netzspannung auf einen für die elektronischen Bauelemente verwendbaren Klein-Spannungs-Wert. Ein Brückengleichrichter 31 wandelt die heruntertransformierte Wechselspannung in eine pulsierende Gleichspannung um. Die beiden Sicherungsglieder 15 und 16 und ggf. weitere Schaltglieder 28,29 liegen in Serie mit einem Vorwiderstand R1 und bilden zusammen mit einem weiteren Widerstand einen Spannungsteiler, an den ein Transistor 33 mit seiner Basis angeschlossen ist.

Werden die beiden Sicherungsglieder 15,16 am hinteren Handgriff 11 und am Griffbügel (Handgriff 12) gleichzeitig (und zusammen mit den ggf. vorhandenen weiteren Schaltkontakten 28,29) betätigt, so fließt ein Transistor-Basisstrom, so daß der Transistor 33 in der Kollektor-Emitterstrecke leitend wird und ein Kollektorstrom fließen kann, wodurch ein Motorrelais 24 anzieht, den Laststromkreis schließt und den Elektromotor in Bewegung setzt.

Die in Serie geschalteten Schaltkontakte 15,16,28 und 29 verkörpern in der Schaltung aus Figur 4 eine elementare Form des UND-Gliedes. Der Transistor 33 stellt einen Leistungsteil dar, welcher das Motorrelais 24 ansteuert. Der einfache Schaltungsaufbau mit bewährten Bauelementen ergibt eine robuste und sicher funktionierende Schaltung, die leicht auf weitere Signalkontakte ausgeweitet werden kann. Selbstverständlich können anstelle der diskreten Bauelemente auch geeignete integrierte Schaltungen verwendet werden.

Insgesamt ergibt sich mit der Erfindung ein fremdangetriebenes Handarbeitsgerät mit Sicherheitsschaltung, welches einfach aufgebaut, leicht und sicher handhabbar und flexibel an verschiedene Anwendungsfälle anpaßbar ist.

### Bezugszeichenliste:

- 10: Gehäuse
- 11,12: Handgriff
- 13: Schaltglied
- 14: Antrieb
- 15,16: Sicherungsglied
- 17: Nut
- 18: Hohlraum
- 19a,b: Kontaktleiter
- 20: Steuerlogik
- 21: Netzleitung
- 22: Kunststoffkanal
- 23: Netzteil
- 24: Motoransteuerungseinheit (z.B.Relais)
- 25: Elektromotor
- 26: Leistungsteil
- 27: UND-Glied
- 28: Überlastschalter
- 29: Kontakt (Kettenbremse)
- 30: Transformator
- 31: Brückengleichrichter
- 33: Transistor
- 100: Handarbeitsgerät
- R1,..,R4: Widerstand

## Patentansprüche

1. Handarbeitsgerät (100) mit einem Antrieb (14), insbesondere in Form einer Kettensäge oder Heckenschere, wobei das Handarbeitsgerät (100) mit zwei Handgriffen (11,12) und einem für die Steuerung des Antriebes (14) vorgesehenen Schaltglied (13) ausgestattet ist, und zur Sicherstellung einer Zwei-Hand-Bedienung an jedem der zwei Handgriffe (11,12) ein Sicherungsglied (15,16) aufweist, welches mit dem Schaltglied (13) derart zusammenwirkt, daß eine Betätigung des Schaltgliedes (13) nur beim Umfassen beider Handgriffe (11,12) erfolgen kann,
dadurch gekennzeichnet,
daß zumindest eines der beiden Sicherungsglieder (15,16) als elektrisch wirksamer linienförmiger Sensor ausgebildet ist und über eine als Niederspannungsschaltung ausgelegte Steuerlogik (20) den Antrieb (14) steuert.

2. Handarbeitsgerät nach Anspruch 1,
dadurch gekennzeichnet,
daß beide Sicherungsglieder (15,16) als elektrisch arbeitende, linienförmige Sensoren ausgebildet und gemeinsam an die Steuerlogik (20) angeschlossen sind.

3. Handarbeitsgerät nach Anspruch 2,
dadurch gekennzeichnet,
daß das Handarbeitsgerät (100) als Antrieb (14) einen mit Netzspannung betreibbaren Elektromotor (25) aufweist, daß die Steuerlogik (20) über ein galvanisch trennendes Netzteil (23) an das Netz anschließbar ist, und daß die Steuerlogik (20) den Elektromotor (25) über eine Motoransteuerungseinheit (24), beispielsweise ein Relais, steuert.

4. Handarbeitsgerät nach einem der Ansprüche 1 bis 3,
dadurch gekennzeichnet,
daß der bzw. die linienförmigen Sensoren (15,16) jeweils zwei in einem schlauchartigen, elastischen und nichtleitenden Kunststoffkanal (22) parallel zueinander angeordnete, sich im ungedrückten Zustand des Kunststoffkanals (22) nicht berührende Kontaktleiter (19a,b) umfassen, welche beim Zusammendrücken des Kunststoffkanals (22) miteinander in Berührung kommen und durch Schließen des Kontaktes ein elektrisches Signal abgeben.

5. Handarbeitsgerät nach Anspruch 4,
dadurch gekennzeichnet,
daß der bzw. die linienförmigen Sensoren (15,16) in einer auf der Außenseite des jeweiligen Handgriffes (11,12) angeordneten Nut (17) so untergebracht sind, daß ein zusammendrückbarer Teil der Sensoren (15,16) aus dem Handgriff (11,12) herausragt.

6. Handarbeitsgerät nach einem der Ansprüche 1 bis 5,
dadurch gekennzeichnet,
daß die Steuerlogik (20) ein UND-Glied (27) und ein daran angeschlossenes Leistungsteil (26) umfaßt.

7. Handarbeitsgerät nach Anspruch 6,
dadurch gekennzeichnet,
daß das UND-Glied (27) als Serienschaltung der Sicherungsglieder (15,16) und ggf. weiterer Schaltkontakte ausgebildet ist, und daß die Leistungsstufe (26) wenigstens einen Transistor (33) umfaßt.

8. Handarbeitsgerät nach Anspruch 7,
dadurch gekennzeichnet,
daß die Basis des Transistors (33) an den Mittelabgriff eines Spannungsteilers angeschlossen ist, dessen einer Zweig aus einer Serienschaltung der Sicherungsglieder (15,16), der ggf. weiteren Schaltkontakte und eines Vorwiderstandes (R1), und dessen anderer Zweig aus einem weiteren Widerstand (R4) gebildet wird.
